(19) Europäisches Patentamt / European Patent Office / Office européen des brevets

(11) **EP 2 698 898 B1**

(12) **EUROPEAN PATENT SPECIFICATION**

(45) Date of publication and mention
of the grant of the patent:
**14.06.2017  Bulletin 2017/24**

(51) Int Cl.:
**H04B 5/02** *(2006.01)*

(21) Application number: **12770706.5**

(86) International application number:
**PCT/JP2012/058924**

(22) Date of filing: **02.04.2012**

(87) International publication number:
**WO 2012/141028 (18.10.2012 Gazette 2012/42)**

(54) **WIRELESS POWER SUPPLY SYSTEM**

DRAHTLOSES STROMVERSORGUNGSSYSTEM

SYSTÈME DE FOURNITURE DE PUISSANCE SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2011  JP 2011087537**

(43) Date of publication of application:
**19.02.2014  Bulletin 2014/08**

(73) Proprietor: **Nitto Denko Corporation
Ibaraki-shi, Osaka 567-8680 (JP)**

(72) Inventors:
• **HATANAKA, Takezo
Ibaraki-shi
Osaka 567-8680 (JP)**
• **TSUDA, Hisashi
Ibaraki-shi
Osaka 567-8680 (JP)**

(74) Representative: **Müller-Boré & Partner
Patentanwälte PartG mbB
Friedenheimer Brücke 21
80639 München (DE)**

(56) References cited:
**JP-A- 2010 103 200      JP-A- 2010 103 200
JP-A- 2010 124 522      US-A1- 2010 123 452
US-A1- 2010 213 770**

• **TAKUYA KOYANAGI ET AL.: 'Wireless Power
Transfer System for Electric Vehicle via magnetic
Resonance in MHz Frequency Band' NATIONAL
CONVENTION RECORD, I.E.E. JAPAN vol. 2010,
no. 2, 24 August 2010, pages 11293 - 11296,
XP008171770**
• **TAKEHIRO IMURA: 'Present and Future of
Wireless Power Transfer for Electric Vehicle'
NATIONAL CONVENTION RECORD I.E.E. JAPAN
vol. 2011, no. 4, 16 March 2011, pages 4.S18(14)
- 4.S18(17), XP008171758**

EP 2 698 898 B1

## Description

Technical Field

The present invention relates to a wireless power supply system which creates a magnetic resonant state for contactless power transmission.

Background Art

Examples of traditionally known wireless power supplying technology include one involving electromagnetic induction, and one that uses electromagnetic waves. To add this, a wireless power-supply technology involving a magnetic resonant state has been proposed in recent years.

A power supplying technology involving this magnetic resonant state (also known as: magnetic resonance, magnetic field resonance, magnetic field resonance) is a technology which enables transmission of energy (power) by means of electromagnetic coupling between two resonators resonating with each other. Unlike a wireless power-supply technology involving electromagnetic induction, this wireless power-supply technology involving the magnetic resonant state allows transmission of energy (power) for a longer distance.

However, in the above-described power supplying technology involving a magnetic resonant state, there is a problem that unstable electromagnetic coupling between the two resonators lead to a drop in the power transmission efficiency.

To address such a problem, for example, PTL 1 discloses a wireless power supply system in which deterioration in power transmission efficiency of power from a power transmission device to a power-receiving device is prevented by varying the resonance frequencies of a power transmission resonance coil and a power receiving resonance coil so as to successively vary the coupling strength between these coils and maintain the resonant state, even when the distance between these coils varies. Further, PTL 2 discloses a wireless power device whose overall power transmission efficiency is improved by varying the coupling strength between a power transmission coil and a power receiving coil. Further, PTL 3 discloses a power supply system having a power supplying resonance coil and a power receiving resonance coil between a power supplying coil and a power receiving coil, in which system a distance c between the power supplying resonance coil and the power receiving resonance coil is detected at a time of conducting contactless power supply, and a distance a between the power supplying coil and the power supplying resonance coil and a the distance b between the power receiving coil and the power receiving resonance coil is variably adjusted according to the distance c, so as to maximize the power-supplying efficiency.

Citation List

Patent Literature

[PTL 1] Japanese Unexamined Patent Publication No. 239769/2010 (Tokukai 2010-239769)
[PTL 2] Japanese Unexamined Patent Publication No. 239777/2010 (Tokukai 2010-239777)
[PTL 3] Japanese Unexamined Patent Publication No. 124522/2010 (Tokukai 2010-124522)

Summary of Invention

Technical Problem

Indeed, the above-mentioned disclosed technologies prevent deterioration in the power transmission efficiency. However, the above-mentioned disclosed technologies necessitate control devices for varying the resonance frequency, for varying the coupling strength between two resonators, and for adjusting the distances between the power supplying coil and the power supplying resonance coil and between the power receiving coil and the power receiving resonance coil. This causes a complex structure and an increase in costs.

US 2010/213770 A1 discloses an induced power transmission circuit that transmits, from a transmission antenna connected to a power supply circuit, an AC power having an angular frequency $\omega$ to a spaced reception antenna.

JP 2010 103200 A discloses a power supply system. A power receiving coil is inserted into a power supply coil to supply power contactlessly. A coil diameter of the power receiving coil is set to be smaller than a coil diameter of the power supply coil to make it possible to insert the power receiving coil into the power supply coil, and resonance frequencies of the power supply coil and the power receiving coil are matched. US 2010/123452 A1 discloses a power supply system that includes: a power supply coil and a power supply-side resonance coil that are provided at a facility; and a power receiving coil and a power receiving-side resonance coil that are provided for a mobile unit.

In view of the above problem, an object of the present invention is to provide a wireless power supply system which maintains a stable state of electromagnetic coupling between two resonators, thus enabling expansion of a space region in which power transmission is possible with stable power transmission efficiency, without a need of traditionally-needed control devices for varying a resonance frequency, for varying coupling strength between two resonators, and for adjusting distances between a power supplying coil and a power supplying resonance coil and between a power receiving coil and a power receiving resonance coil.

Solution to the Problem

An aspect of the present invention to achieve the above object is defined in claim 1.

In the above structure, the coil diameter of the power receiving resonance coil is made smaller than the coil diameter of the power supplying resonance coil. In cases where the coil diameter of the power receiving resonance coil is made smaller, a stable state of electromagnetic coupling between the power supplying resonance coil and the power receiving resonance coil is maintained, without a need of adjusting the frequency of power transmitted or the like. That is, when the power supplying resonance coil and the power receiving resonance coil have the same diameter as in a traditional case, a range of distance in which the electromagnetic coupling is stabilized has been extremely small. This often necessitated adjustment of the frequency of power transmitted or the like. However, with the present invention, the stable state of the electromagnetic coupling is maintained within a broader range of distance than the traditional case. Therefore, the work for adjusting the frequency of power transmitted or the like is no longer necessary. Thus, at a time of transmitting power from the power supplying resonance coil to the power receiving resonance coil, it is possible to expand the space region in which power transmission is possible with stable power transmission efficiency.

The above structure in which the ratio of the coil diameter of the power supplying resonance coil and the coil diameter of the power receiving resonance coil is set within a range of 100:7 to 100:15 maintains the electromagnetic coupling between the power supplying resonance coil and the power receiving resonance coil at a further stable state. That is, the electromagnetic coupling is maintained at the stable state within a further broader range of distance. Thus, at a time of transmitting power from the power supplying resonance coil to the power receiving resonance coil, it is possible to further expand the space region in which power transmission is possible with stable power transmission efficiency.

With the above structure, the power supplied from the power supply unit is transmitted from the power supplying coil to the power supplying resonance coil by means of electromagnetic induction, without a need of creating the magnetic resonant state. Similarly, the power having been received is transmitted from the power receiving resonance coil to the power receiving coil and output to the power supplying/receiving unit by means of electromagnetic induction, without a need of creating the magnetic resonant state. Since there is no need of tuning the power supplying coil and the power supplying resonance coil at the resonance frequency, and tuning the power receiving resonance coil and the power receiving coil at the resonance frequency, it is possible to simplify the design.

Another aspect of the present invention to achieve the above object is a wireless power-supply method defined in claim 2.

In the above method, the coil diameter of the power receiving resonance coil is made smaller than the coil diameter of the power supplying resonance coil. In cases where the coil diameter of the power receiving resonance coil is made smaller, a stable state of electromagnetic coupling between the power supplying resonance coil and the power receiving resonance coil is maintained, without a need of adjusting the frequency of power transmitted or the like. That is, when the power supplying resonance coil and the power receiving resonance coil have the same diameter as in a traditional case, a range of distance in which the electromagnetic coupling is stabilized has been extremely small. This often necessitated adjustment of the frequency of power transmitted or the like. However, with the present invention, the stable state of the electromagnetic coupling is maintained within a broader range of distance than the traditional case. Therefore, the work for adjusting the frequency of power transmitted or the like is no longer necessary. Thus, at a time of transmitting power from the power supplying resonance coil to the power receiving resonance coil, it is possible to expand the space region in which power transmission is possible with stable power transmission efficiency.

Advantageous Effects

Unlike a traditional structure, it is possible to provide a wireless power supply system which maintains a stable state of electromagnetic coupling between two resonators while preventing a drop in the power transmission efficiency, without a need of control devices for varying the resonance frequency, for varying coupling strength between two resonators, and for adjusting distances between a power supplying coil and a power supplying resonance coil and between a power receiving coil and a power receiving resonance coil.

Brief Description of Drawings

[Fig. 1] FIG. 1 is an explanatory diagram of a wireless power supply system related to the present invention.
[Fig. 2] FIG. 2 is a structural diagram of a wireless power supply system related to an example.
[Fig. 3] FIG. 3 shows an example measurement of an insertion loss, in relation to an example.
[Fig. 4] FIG. 4 is a graph plotting coupling coefficient *k* when a distance C is varied in an example.
[Fig. 5] FIG. 5 is a graph related to Comparative Example 1, and shows power transmission efficiency with variation in the distances between a power supplying resonance coil and a power receiving resonance coil.
[Fig. 6] FIG. 6 is a graph related to Example 1, and shows power transmission efficiency with variation in the distance between a power supplying resonance coil and a power receiving resonance coil.
[Fig. 7] FIG. 7 is a graph related to Example 2, and shows power transmission efficiency with variation in the distance between a power supplying resonance coil and a power receiving resonance coil.
[Fig. 8] FIG. 8 is an explanatory diagram of a wireless power supply system related to Embodiment 1.

Description of Embodiments

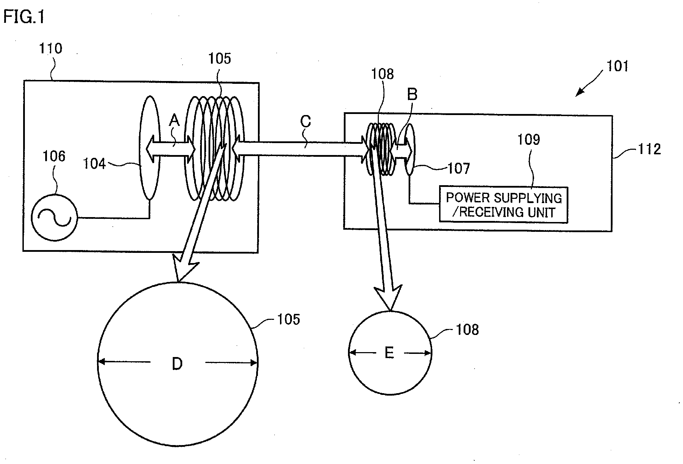

First, the following describes an overview of a wireless power supply system and a wireless power-supply method related to the present invention, with reference to Fig. 1.
A wireless power supply system 101 related to the present invention transmits power as magnetic field energy from a power supplying resonance coil 105 to a power receiving resonance coil 108, by resonating the power supplying resonance coil 105 with the power receiving resonance coil 108. A characteristic of this wireless power supply system 101 is that the coil diameter E of the power receiving resonance coil 108 is made smaller as compared with the coil diameter D of the power supplying resonance coil 105.
The power supplying resonance coil 105 and the power receiving resonance coil 108 are a resonator adopting a coil such as a spiral type, a solenoid type, and a loop type coils. Resonance is a phenomena in which the power supplying resonance coil 105 and the power receiving resonance coil 108 are tuned to a resonance frequency (e.g., this takes place when power is output from an AC power source 106 at a frequency identical to the resonance frequency of the power supplying resonance coil 105 and the power receiving resonance coil 108). Note that the coil diameter means a length of the coil relative to a radial direction.
The above system maintains a stable state of electromagnetic coupling between the power supplying resonance coil 105 and the power receiving resonance coil 108, without a need of adjusting the frequency of power transmitted or the like. When the power supplying resonance coil 105 and the power receiving resonance coil 108 have the same diameter as in a traditional case, the range of distance in which electromagnetic coupling occurs is extremely narrow, consequently necessitating adjustment of the frequency of power transmitted or the like. However, with the above structure, stable electromagnetic coupling is maintained within a broader range than the traditional structures. This eliminates the need for work of adjusting the frequency of power transmitted or the like. This, at a time of transmitting power from the power supplying resonance coil 105 to the power receiving resonance coil 108, enables expansion of a space region in which power transmission is possible with a stable power transmission efficiency, and broadens the range of use of the wireless power supply system; e.g., for supplying power to a power supplying/receiving unit 109 including a battery or the like, which is carried to any given place.

(Examples)

Next, the following describes a wireless power supply system 1 which is the above described wireless power supply system 101 realized with a simple structure.

(Structure of Wireless Power Supply System 1)

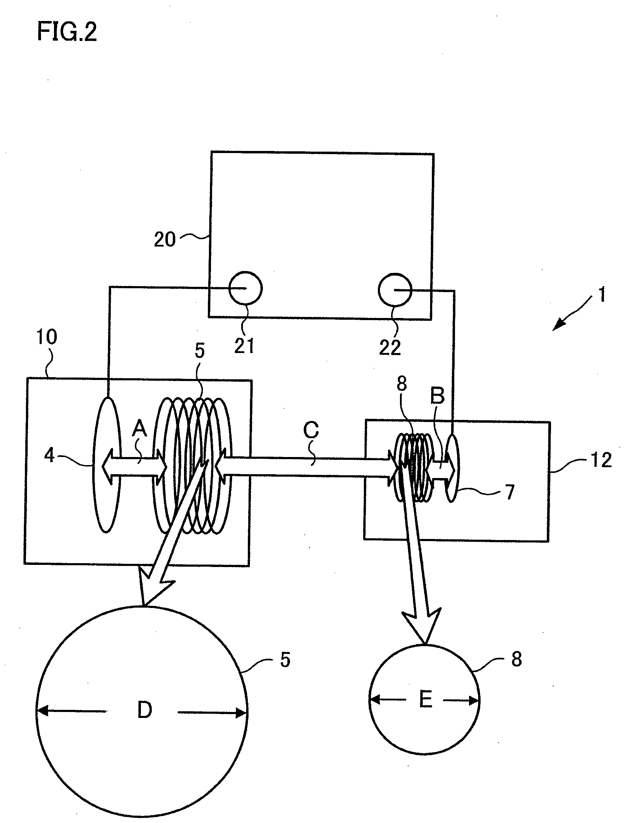

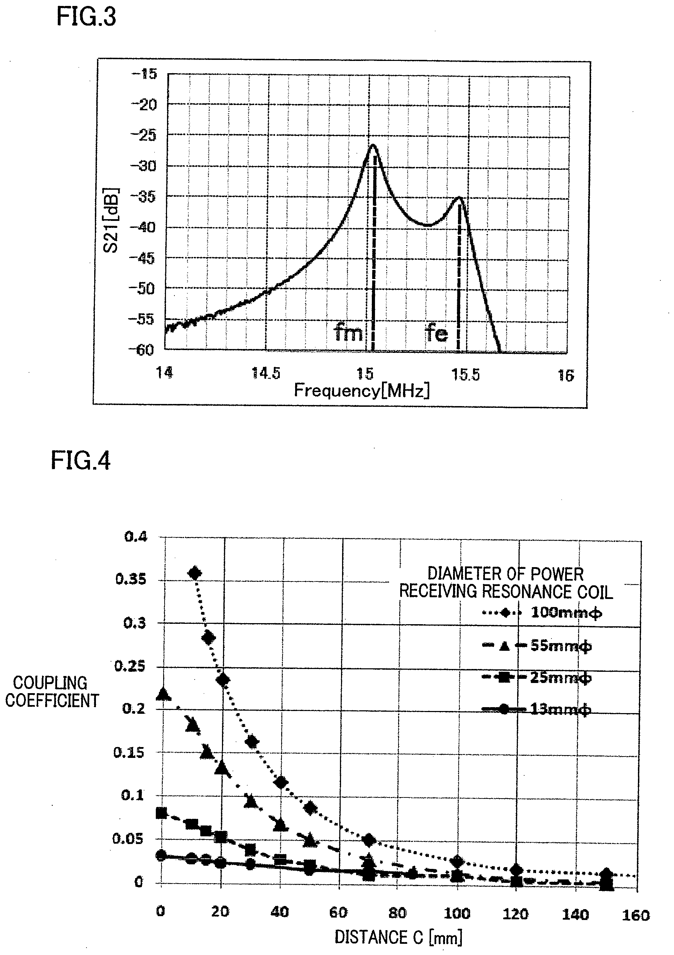

The wireless power supply system 1 shown in Fig. 2 includes a power transmission device 10 and a power-receiving device 12, and transmits power as magnetic field energy from the power transmission device 10 to the power-receiving device 12. The power transmission device 10 has therein a power supplying coil 4 and a power supplying resonance coil 5, as shown in Fig. 2. The power supplying coil 4 is connected to an output terminal 21 of a network analyzer 20 (Agilent Technologies, Inc.), in place of an AC power source. The power-receiving device 12 has therein a power receiving coil 7 and a power receiving resonance coil 8. The power receiving coil 7 is connected to an input terminal 22 of the network analyzer 20, in place of a power supplying/receiving unit.
The network analyzer 20 enables output of AC power at any given frequency, from the output terminal 21 to the power supplying coil 4. This network analyzer 20 is capable of measuring power input from the power receiving coil 7 via the input terminal 22. The network analyzer 20 is further capable of measuring an insertion loss "S21" shown in Fig. 3, a coupling coefficient shown in Fig. 4, and power transmission efficiency, as hereinafter detailed.

The power supplying coil 4 plays a role in supplying power given from the network analyzer 20 to the power supplying resonance coil 5, by means of electromagnetic induction. The power supplying coil 4 is formed by winding once a copper wire material (coated by insulation film) having a wire diameter of 1 mmø, and its diameter is set for use in each of examples and comparative examples. Where the distance between the power supplying coil 4 and the power supplying resonance coil 5 is A, the distance A is fixed to a predetermined value in the examples and the comparative examples.

The power receiving coil 7 plays a role in outputting the power having been transferred as the magnetic field energy from the power supplying resonance coil 5 to the power receiving resonance coil 8 to the input terminal 22 of the network analyzer 20 by means of electromagnetic induction. The power receiving coil 7 is formed by winding once a copper wire material (coated by insulation film) having a wire diameter of 1 mmø, and its diameter is set for use in each of examples and comparative examples. Where the distance between the power receiving resonance coil 8 and the power receiving coil 7 is B, the distance B is fixed to a predetermined value in the examples and the comparative examples.

The power supplying resonance coil 5 and the power receiving resonance coil 8 are each an LC resonance circuit and plays a role in creating a magnetic resonant state. Note that, in the present embodiment, a capacitor component of the LC resonance circuit is realized in the form of an element; however, the capacitor component may be a stray capacitance generated by making both ends of the coil open. Where the inductance is L, and the capacity of capacitor is C in the LC resonance circuit, the f determined by (Formula 1) is the resonance frequency.

$$f = 1 / (2\pi\sqrt{(LC)}) \cdots (Formula\ 1)$$

The power supplying resonance coil 5 has a diameter which is set for use in each of the examples and comparative examples, and is formed by winding more than once a copper wire material (coated by insulation film) having a wire diameter of 1 mmø to achieve that diameter of the power supplying resonance coil. The power receiving resonance coil 8 has a diameter which is set for use in each of the examples and the comparative examples, and is formed by winding more than once a copper wire material (coated by insulation film) having a wire diameter of 1 mmø to achieve that diameter of the power receiving resonance coil. As shown in Fig. 2, the diameter of the power supplying resonance coil is the coil diameter $D$ and the diameter of the power receiving resonance coil is the coil diameter $E$. Since the resonance frequency f determined by (Formula 1) need to be the same for the power supplying resonance coil 5 and the power receiving resonance coil 8, the resonance frequency is tuned to 15.3 MHz.

As described, when the resonance frequencies of the power supplying resonance coil 5 and the power receiving resonance coil 8 are made the same value, a magnetic resonant state is created between the power supplying resonance coil 5 and the power receiving resonance coil 8. Bringing the power supplying resonance coil 5 to a resonant state to create the magnetic resonant state enables transmission of power as magnetic field energy therefrom to the power receiving resonance coil 8.

The distance between the power supplying resonance coil 5 and the power receiving resonance coil 8 is set to C. This distance C is varied for use in each of the examples and comparative examples.

(Measurement Method)

Next, with the use of the network analyzer 20, the coupling coefficient $k$ was measured with the power supplying resonance coil 5 and the power receiving resonance coil 8 spaced from each other by various distances $C$. In the measurement, while the coil diameter of the power supplying resonance coil 5 was fixed to 100 mmø, the coil diameter $E$ of the power receiving resonance coil 8 was changed to 13 mmø, 25 mmø, 55 mmø, and 100 mmø. The coupling coefficient $k$ is an index to indicate the strength of coupling between the power supplying resonance coil 5 and the power receiving resonance coil 8.

When measuring the coupling coefficient $k$, for example, the coil diameter E of the power receiving resonance coil 8 was set to 100 mmø, and the insertion loss "S21" was measured while the distance $C$ was changed within a range from 0 to 160 mm. Similarly, the insertion loss "S21" was measured while the coil diameter of the power receiving resonance coil 8 was changed to 13 mmø, 25 mmø, and 55 mmø. In the graph of Fig. 3, the horizontal axis shows the frequency of the output from the output terminal 21 and the vertical axis shows the insertion loss "S21".

Strong coupling between the power supplying coil 4 and the power supplying resonance coil 5 influences the coupling state between the power supplying resonance coil 5 and the power receiving resonance coil 8, making accurate measurement difficult. For this reason, it was necessary to keep the distance A between the power supplying coil 4 and the power supplying resonance coil 5 at a distance such that the power supplying resonance coil 5 was sufficiently driven, thus generating the magnetic field thereof, and yet coupling between the power supplying coil 4 and the power supplying resonance coil 5 was avoided as much as possible. For the similar reason, it was necessary to keep the distance *B* between power receiving resonance coil 8 and the power receiving coil 7 at a distance such that the power receiving resonance coil 8 was sufficiently driven, thus generating the magnetic field thereof, and yet coupling between the power receiving resonance coil 8 and the power receiving coil 7 was avoided as much as possible.

The insertion loss "S21" indicates a signal passing the input terminal 22 when a signal is input from the output terminal 21. The insertion loss "S21" is indicated in decibel, and the greater the value, the higher the power transmission efficiency. The power transmission efficiency is a rate of power output to the input terminal 22 relative to the power supplied from the output terminal 21 to the power supplying resonance coil 5. That is, the higher the insertion loss "S21", the higher the power transmission efficiency.

A resulting waveform of the insertion loss "S21" thus measured has its peak split in a low frequency side and a high frequency side. The frequency at the split peak on the high frequency side is $f_e$, and the frequency of the split peak on the low frequency side is $f_m$. The coupling coefficient $k$ is derived by the following (Formula 2).

$$k = (f_e{}^2 - f_m{}^2) \; / \; (f_e{}^2 + f_m{}^2) \; \cdots \; (\text{Formula 2})$$

For various distances *C*, the coupling coefficient $k$ was measured, with the coil diameter of the power receiving resonance coil 8 set to 13 mmø, 25 mmø, 55 mmø, and 100 mmø. The results are shown in Fig. 4.

From the measurement results shown in Fig. 4, it is understood that variation (increasing and decreasing) in the coupling coefficient $k$ relative to the distance *C* is reduced and stabilized with a decrease in the coil diameter *E* of the power receiving resonance coil 8 relative to the coil diameter *D* of the power supplying resonance coil 5.

Further, variation in the power transmission efficiency accompanying changes in the distance *C* between the power supplying resonance coil 5 and the power receiving resonance coil 8 was measured with various ratios of the coil diameter *D* of the power supplying resonance coil 5 and the coil diameter *E* of the power receiving resonance coil 8. Note that in the measurement, the central axis of the power supplying resonance coil 5 was coincided with that of the power receiving resonance coil 8. Further, the distance *A* between the power supplying coil 4 and the power supplying resonance coil 5 and the distance *B* between the power receiving coil 7 and the power receiving resonance coil 8 were fixed to suit in each of the examples and the comparative examples. The frequencies of power transmitted from the network analyzer 20 included the resonance frequency of the power supplying resonance coil 5 and the power receiving resonance coil 8. Note that the power transmission efficiency is a measurement of the percentage of power output to the input terminal 22 for the power supplied from the output terminal 21 to the power supplying resonance coil 5 at a frequency of 15.3 MHz which is the same as the resonance frequency of the power supplying resonance coil 5 and the power receiving resonance coil 8. That is, the power transmission efficiency serves as a criterion for measuring the rate of loss in the power, when the frequency of power transmitted is 15.3 MHz, and when power is transmitted from the power supplying resonance coil 5 resonating with the power receiving resonance coil 8, to the power receiving resonance coil 8.

(Comparative Example 1)

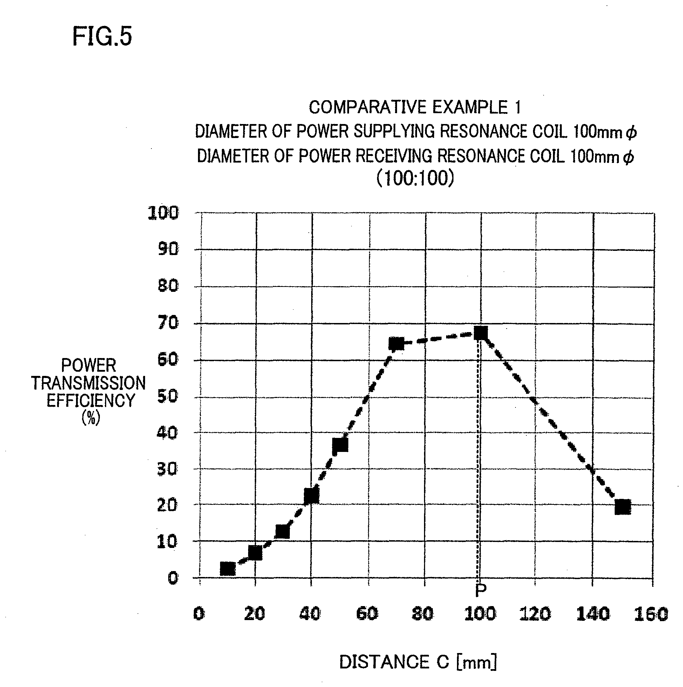

In a wireless power supply system related to Comparative Example 1, the power supplying coil diameter of the power supplying coil 4 was set to 100 mmø. The power supplying resonance coil 5 was formed by winding three times a copper wire material (coated by insulation film) having a wire diameter of 1 mmø so that the coil diameter D was 100 mmø. The distance A between the power supplying coil 4 and the power supplying resonance coil 5 was set to 17 mm. Meanwhile, the power receiving coil diameter of the power receiving coil 7 was set to 100 mmø. The power receiving resonance coil 8 was formed by winding three times a copper wire material (coated by insulation film) having a wire diameter of 1 mmø*E* was 100 mmø. The distance *B* between the power receiving coil 7 and the power receiving resonance coil 8 was set to 17 mm. With the above setting, there was conducted measurement of variation in the power transmission efficiency accompanying a change in the distance *C* between the power supplying resonance coil 5 and the power receiving resonance coil 8 in the wireless power supply system related to Comparative Example 1 (coil diameter *D*: coil diameter *E* = 100:100). Then, as shown in the graph of Fig. 5, the power transmission efficiency was lowered when the power supplying resonance coil 5 and the power receiving resonance coil 8 were close to each other (on the left side of distance *C* = *P* in the graph where the power transmission efficiency is maximized). The power transmission efficiency varied from low values to high values within a range of the distance *C* from 0 to the distance *P* where the power transmission efficiency is maximized. This means that the power transmission efficiency is not stabilized.

(Example 1)

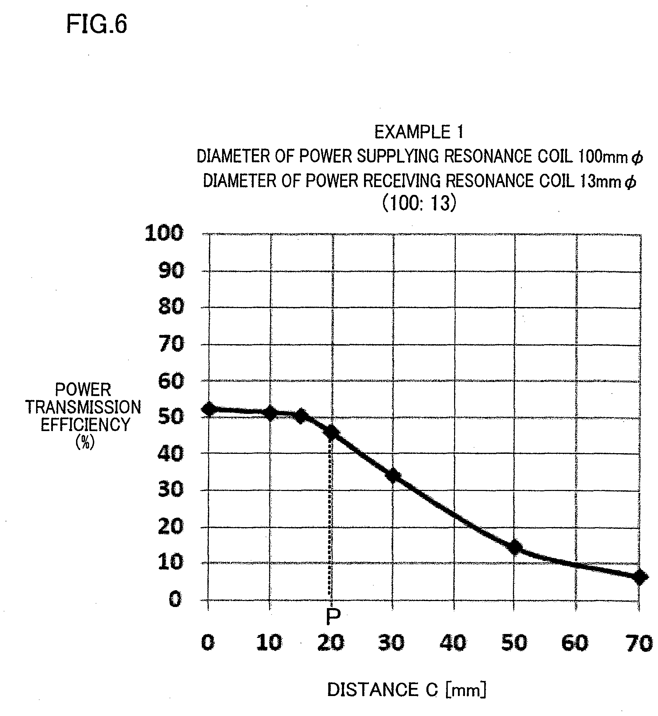

Next, in the wireless power supply system related to Example 1, the power supplying coil diameter of the power supplying coil 4 was set to 100 mmø. The power supplying resonance coil 5 was formed by winding three times a copper wire material (coated by insulation film) having a wire diameter of 1 mmø so that the coil diameter *D* was 100 mmø. The distance A between the power supplying coil 4 and the power supplying resonance coil 5 was set to 10 mm. Further, the power receiving coil diameter of the power receiving coil 7 was set to 13 mmø. The power receiving resonance coil 8 was formed by winding 13 times a copper wire material (coated by insulation film) having a wire diameter of 1 mmø so that the coil diameter *E* was 13 mmø. The distance *B* between the power receiving coil 7 and the power receiving resonance coil 8 was set to 1 mm. With the above setting, there was conducted measurement of variation in the power transmission efficiency accompanying variation in the distance *C* between the power supplying resonance coil 5 and the power receiving resonance coil 8, in the wireless power supply system of Example 1 (coil diameter *D*: coil diameter *E* = 100:13). As shown in the graph of Fig. 6, the power transmission efficiency smoothly decreased within a range of distance *C* from 0 to the distance *P*. It is therefore understood that the power transmission efficiency was more stable than Comparative Example 1. This means that, within the range of the distance *C* from 0 to the distance *P*, transmitting predetermined power does not require controls for adjusting the frequency of power transmitted, adjusting the distance *A* between the power supplying coil 4 and the power supplying resonance coil 5, and adjusting the distance *B* between the power receiving coil 7 and the power receiving resonance coil 8, unlike PTL 1 and PTL 3, and that the power is transmittable with a stable efficiency.

(Example 2)

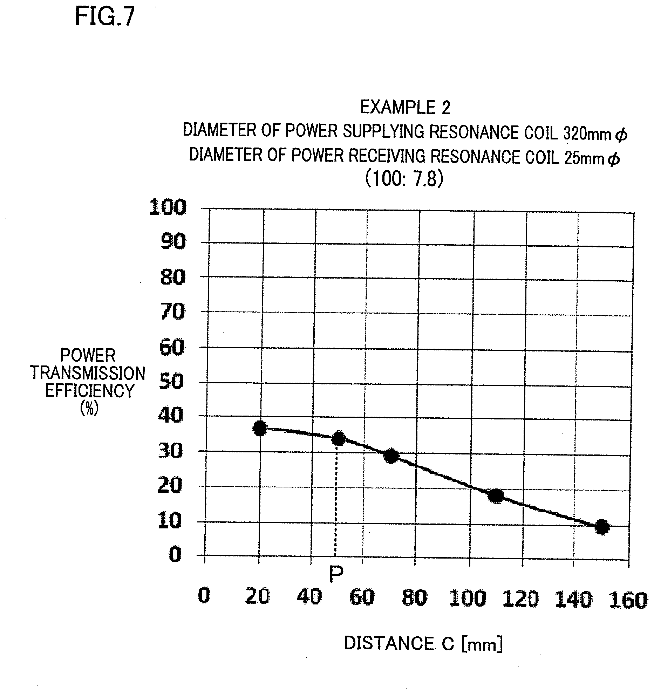

Next, in a wireless power supply system related to Example 2, the power supplying coil diameter of the power supplying coil 4 was set to 320 mmø. The power supplying resonance coil 5 was formed by winding twice a copper wire material (coated by insulation film) having a wire diameter or 1 mmø so that the coil diameter *D* was 320 mmø. The distance *A* between the power supplying coil 4 and the power supplying resonance coil 5 was set to 110 mm. Meanwhile, the power receiving coil diameter of the power receiving coil 7 was set to 25 mmø. The power receiving resonance coil 8 was formed by winding 11 times a copper wire material (coated by insulation film) having a wire diameter of 1 mmø so that the coil diameter *E* was 25 mmø. The distance *B* between the power receiving coil 7 and the power receiving resonance coil 8 was set to 1 mm. With the setting, there was conducted measurement of variation in the power transmission efficiency accompanying changes in the distance C between the power supplying resonance coil 5 and the power receiving resonance coil 8, in the wireless power supply system related to Example 2 (coil diameter *D*: coil diameter *E* = 100:7.8) . As shown in the graph of Fig. 7, the power transmission efficiency smoothly decreased within a range of the distance *C* from 0 to the distance *P*. It is therefore understood that the power transmission efficiency was more stable than Comparative Example 1. This means that, within the range of distance *C* from 0 to the distance *P*, transmitting predetermined power does not require controls for adjusting the frequency of power transmitted, adjusting the distance *A* between the power supplying coil 4 and the power supplying resonance coil 5, and adjusting the distance *B* between the power receiving coil 7 and the power receiving resonance coil 8, unlike PTL 1 and PTL 3 and that the power is transmittable with a stable efficiency.

Comparing and referring to the above described comparative examples and the examples, it should be understood that a drop in the power transmission efficiency due to changes in the distance *C*, when the power supplying resonance coil 5 and the power receiving resonance coil 8 are located close to each other, is preventable by reducing the coil diameter *E* of the power receiving resonance coil 8 in relation to the coil diameter *D* of the power supplying resonance coil 5. That is, in the wireless power supply system 1 in each of the examples, the electromagnetic coupling is stabilized in a broader range than the comparative example, which leads to stabilization of the power transmission efficiency. As such, for example, it is possible to expand a space region in which power transmission is possible with stable power transmission efficiency, at a time of charging a battery connected to the power receiving resonance coil 8.

Thus, by reducing the coil diameter *E* of the power receiving resonance coil 8 relative to the coil diameter *D* of the power supplying resonance coil 5, it is possible to maintain a stable state of the electromagnetic coupling between the power supplying resonance coil 5 and the power receiving resonance coil 8, without a need of adjusting the frequency of output from the AC power source, the distance *A* between the power supplying coil 4 and the power supplying resonance coil 5, and the distance *B* between the power receiving coil 7 and the power receiving resonance coil 8. When the diameters of the power supplying resonance coil 5 and the power receiving resonance coil 8 are the same as in a traditional case, the range of distance in which the electromagnetic coupling is stable has been extremely narrow, and the frequency of the output from the AC power source, the distance *A*, and the distance *B* have been often adjusted. With the present invention however, the electromagnetic coupling is maintained at a stable state in a broader range of distance than traditional cases. Therefore, a work for adjusting the frequency, the distance *A*, and the distance *B* is no longer needed. Furthermore, the use of wireless power supply system is expanded; e.g., power feeding to the batteries of home-use electric appliances that are movable to arbitrary positions.

Further, referring to the above-described examples, it is understood that a drop in the power transmission efficiency accompanying changes in the distance $C$ between the power supplying resonance coil 5 and the power receiving resonance coil 8 was effectively prevented, when the ratio of the coil diameter $D$ of the power supplying resonance coil 5 and the coil diameter $E$ of the power receiving resonance coil 8 was within a range from 100:7 to 100:15. That is, since the power transmission efficiency smoothly decreased within a range of the distance $C$ from 0 to the distance $P$, it is understood that the power transmission efficiency was more stable than Comparative Example 1. This means that, within the range of distance $C$ from 0 to the distance $P$, transmitting predetermined power does not require controls for adjusting the frequency of power transmitted, adjusting the distance $A$ between the power supplying coil 4, and adjusting the power supplying resonance coil 5 and the distance $B$ between the power receiving coil 7 and the power receiving resonance coil 8, unlike PTL 1 and PTL 3 and that the power is transmittable with a stable efficiency. As such, for example, it is possible to further expand a space region in which power transmission is possible with more stable power transmission efficiency, at a time of charging a battery connected to the power receiving resonance coil 8.

From the above, it should be understood from the measurement results of the wireless power supply system 1 described in the above described examples, the present invention is sufficiently feasible.

(Embodiment 1)

A wireless power supply system related to the present invention which is described in reference to the above described examples is applied to a wireless power supply system 201 of Embodiment 1 below.

(Structure of Wireless Power Supply System 201)

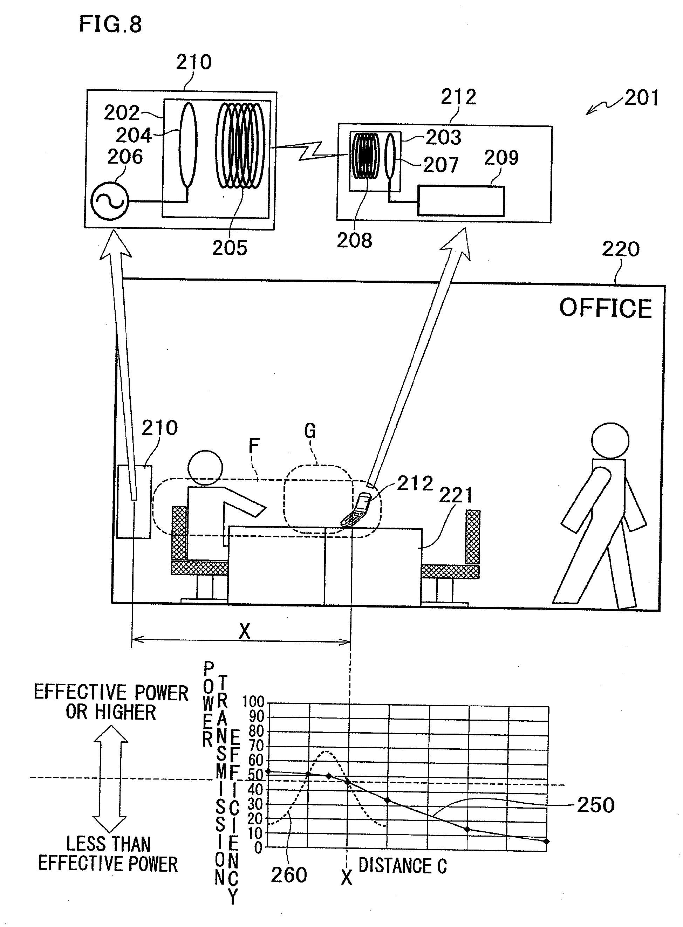

Fig. 8 is an explanatory diagram of a wireless power supply system 201 related to Embodiment 1. The wireless power supply system 201 shown in Fig. 8 includes: a power transmission device 210 hang on a wall of an office 220; and a power-receiving device in a mobile phone 212 or the like placed on a desk 221. The power transmission device 210 includes: an AC power source 206, a power supplying coil 204 connected to the AC power source 206, and a power supplying resonance coil 205. The power-receiving device in the mobile phone 212 or the like includes: a power supplying/receiving unit 209, a power receiving coil 207 connected to the power supplying/receiving unit 209, and a power receiving resonance coil 208.

The power supplying coil 204 plays a role in supplying power obtained from the AC power source 206 to the power supplying resonance coil 205 by means of electromagnetic induction. The "A" indicates a distance between the power supplying coil 204 and the power supplying resonance coil 205. The power supplying coil 204 and the power supplying resonance coil 205 are arranged on a single flat substrate 202, while the distance A between power supplying coil 204 and the power supplying resonance coil 205 is fixed.

As described, power transmission to the power supplying resonance coil 205 via the power supplying coil 204 by means of electromagnetic induction eliminates the need for electrically connecting the power supplying resonance coil 205 with another circuit, and provides more freedom in highly accurate designing of the power supplying resonance coil 205.

The power receiving coil 207 plays a role in outputting a power having been transmitted as magnetic field energy from the power receiving resonance coil 208 to the power supplying resonance coil 205 to the power supplying/receiving unit 209 by means of electromagnetic induction. Note that the "B" indicates a distance between the power receiving resonance coil 208 and the power receiving coil 207. The power receiving resonance coil 208 and the power receiving coil 207 are arranged on a single flat substrate 203, while the distance B between the power receiving resonance coil 208 and the power receiving coil 207 is fixed.

The power transmitted to the power receiving resonance coil 208 during the magnetic resonant state is transferred as energy from the power receiving resonance coil 208 to the power receiving coil 207 by means of electromagnetic induction. The power receiving coil 207 is electrically connected to the power supplying/receiving unit 209, and the energy having transferred to the power receiving coil 207 by means of electromagnetic induction is output as power to the power supplying/receiving unit 209.

As described, power transmission from the power receiving resonance coil 208 to the power supplying/receiving unit 209 via the power receiving coil 207 by means of electromagnetic induction eliminates a need for electrically connecting the power receiving resonance coil 208 to another circuit, and provides more freedom in highly accurate designing of the power receiving resonance coil 208.

The power supplying resonance coil 205 and the power receiving resonance coil 208 are each an LC resonance circuit and plays a role in creating a magnetic resonant state. Note that, in the present embodiment, a capacitor component of the LC resonance circuit is realized in the form of an element; however, the capacitor component may be a stray capacitance generated by making both ends of the coil open. Where the inductance is $L$, and the capacity of capacitor is *C* in the LC resonance circuit, the *f* determined by (Formula 1) is the resonance frequency.

The resonance frequency *f* determined by (Formula 1) is made the same in the power supplying resonance coil 205 and the power receiving resonance coil 208.

The power supplying resonance coil 205 and the power receiving resonance coil 208 are each formed by a copper wire material coated by an insulation film. As in the examples, the coil diameter *D* of the power supplying resonance coil 205 and the coil diameter *E* of the power receiving resonance coil 208 are designed so that their ratio is 100:13.

As described, when the resonance frequencies of the power supplying resonance coil 205 and the power receiving resonance coil 208 are the same value, a magnetic resonant state is created between the power supplying resonance coil 205 and the power receiving resonance coil 208. Bringing the power supplying resonance coil 205 to a resonant state to create the magnetic resonant state enables transmission of power as magnetic field energy from the power supplying resonance coil 205 to the power receiving resonance coil 208.

Further, where the distance between the power supplying resonance coil 205 and the power receiving resonance coil 208 is *C,* the power supplying resonance coil 205 of the power transmission device 210 and the power receiving resonance coil 208 of the mobile phone 212 are arranged so that the distance *C* therebetween is *X*, as shown in Fig. 8. Further, the distance *C* is a straight distance between coil surfaces when the coil surface of the power supplying resonance coil 205 and the coil surface of the power receiving resonance coil 208 are placed so as not perpendicularly cross each other.

The AC power source 206 outputs an AC power at the frequency same as the resonance frequency of the power supplying resonance coil 205 and the power receiving resonance coil 208.

The power supplying/receiving unit 209 has a rectifier circuit connected to the power receiving coil 207, a power charge control device connected to the rectifier circuit, and a battery connected to the power charge control device. The power supplying/receiving unit 209 plays a role of storing the power transmitted from the power receiving coil 207 in the battery via the rectifier circuit and the power charge control device. Examples of the battery include a nickel-metal hydride battery, a lithium-ion battery, and any other secondary batteries. The power charge control device plays a role of performing control so that the battery is charged when an effective power needed for charging the battery is input.. Therefore, the battery is not charged when the power input falls short of the effective power. Note that the present embodiment assumes that an effective power required for charging battery is regarded as to be input when the of power (power transmission efficiency) output from the power receiving coil 207 to the power supplying/receiving unit 209 and the power supplied from the AC power source 206 to the power supplying coil 204 is 45% or higher (see solid-line 205 of Fig. 8).

(Operation)

In the wireless power supply system 201 with the above-described structure, power supplied from the AC power source 206 is supplied to the battery of the power supplying/receiving unit 209 of the mobile phone 212, through electromagnetic induction between the power supplying coil 204 and the power supplying resonance coil 205, the power transmission utilizing the magnetic resonant state between the power supplying resonance coil 205 and the power receiving resonance coil 208, and electromagnetic induction between power receiving resonance coil 208 and the power receiving coil 207, the mobile phone 212 being arranged so that the distance C between the power supplying resonance coil 205 and the power receiving resonance coil 208 in the power transmission device 210 is "X".

The battery of the mobile phone 212 is charged in this way, because , with the ratio of the coil diameter *D* of the power supplying resonance coil 205 and the coil diameter *E* of the power receiving resonance coil 208 being 100:13, the electromagnetic coupling between the power supplying resonance coil 205 and the power receiving resonance coil 208 is maintained in a stable state and the power transmission efficiency is kept 45% or higher within the space region *F* when the distance *C* between the power supplying resonance coil 205 and the power receiving resonance coil 208 in the power transmission device 210 is within a range of 0 to "X". In other words, the power transmission efficiency is maintained at 45% or higher within the space region *F*, when transmitting power from the power supplying resonance coil 205 to the power receiving resonance coil 208.

Note that Fig. 8 uses dotted line 260 is used to show the power transmission efficiency for the distance *C*, when the ratio of the coil diameter *D* of the power supplying resonance coil 205 for comparison and the coil diameter *E* of the power receiving resonance coil 208 is designed to be 100:100 (when the coil diameter *D* and the coil diameter *E* are the same). In this case, the space region *G* in which transmission of effective power or more is possible is smaller than the space region *F*. This means that the space region *F* between the power supplying resonance coil 205 and the power receiving resonance coil 208 which achieves stable power transmission efficiency when transmitting power from the power supplying resonance coil 205 to the power receiving resonance coil 208 is further expanded by making the coil diameter *E* of the power receiving resonance coil 208 smaller than the coil diameter *D* of the power supplying resonance coil 205.

On the other hand, the battery of the mobile phone 212 is not charged outside the space region *F* because the power transmission efficiency falls short of 45% and the effective power necessary for charging the battery is not ensured.

(Wireless Power-Supply Method)

The above wireless power-supply method is described as a wireless power-supply method. It is supposed that the power transmission device 210 is fixed on a wall of an office 220. The ratio of the coil diameter *D* of the power supplying resonance coil 205 in the power transmission device 210 and the coil diameter *E* of the power receiving resonance coil 208 in the mobile phone 212 is set to satisfy 100:13. The mobile phone 212 is placed on a desk 221 so as to be within the space region *F*. Under this condition, the power supplied from the AC power source 206 supplies, to the battery of the power supplying/receiving unit 209, effective power necessary for charging the battery, through electromagnetic induction between the power supplying coil 204 and the power supplying resonance coil 205, power transmission utilizing the magnetic resonant state between the power supplying resonance coil 205 and the power receiving resonance coil 208, and electromagnetic induction between power receiving resonance coil 208 and the power receiving coil 207.

With the structure in which the ratio of the coil diameter *D* of the power supplying resonance coil 205 and the coil diameter *E* of the power receiving resonance coil 208 is set to be 100: 13, the electromagnetic coupling between the power supplying resonance coil 205 and the power receiving resonance coil 208 is maintained at a stable state and power transmission efficiency of 45% or higher, which enables transmission of effective power necessary for charging the battery, is ensured within the space region *F* when the distance *C* between the power supplying resonance coil 205 and the power receiving resonance coil 208 in the power transmission device 210 is within a range from 0 to "X". That is, when the power supplying resonance coil 205 of the power transmission device 210 and the power receiving resonance coil 208 are the same as in a traditional case, the space region in which the electromagnetic coupling is stabilized is extremely small. This necessitated adjustments of the frequency of power transmitted and the distance between the power supplying coil 204 and the power supplying resonance coil 205. However, since the above structure realizes a broader space region in which the electromagnetic coupling is maintained at a stable state, there is no need for a device or a work for adjusting the frequency of power transmitted or the distance between the power supplying coil 204 and the power supplying resonance coil 205. Thus, for transmission of power from the power supplying resonance coil 205 to the power receiving resonance coil 208, a space region between the power supplying resonance coil 205 and the power receiving resonance coil 208 in which region power transmission is possible with a stable power transmission efficiency is expanded. This expands the use of the wireless power supply system; e.g., for supplying power to a battery of a mobile phone 212 or the like, which is carried to any given place.

Further, the power supplied from the AC power source 206 is transmitted from the power supplying coil 204 to the power supplying resonance coil 205 by means of electromagnetic induction, without a need of creating a magnetic resonant state. Similarly, the power having been received is transmitted from the power receiving resonance coil 208 to the power receiving coil 207 and output to the power supplying/receiving unit 209 by means of electromagnetic induction, without a need of creating the magnetic resonance state. Since there is no need of tuning the power supplying coil 204 and the power supplying resonance coil 205 at the resonance frequency, and tuning the power receiving resonance coil 208 and the power receiving coil 207 at the resonance frequency, it is possible to simplify the design.

The power supplying coil 204 and the power supplying resonance coil 205 are arranged on a single flat substrate 202, while the distance A between power supplying coil 204 and the power supplying resonance coil 205 is fixed. Similarly, the power receiving resonance coil 208 and the power receiving coil 207 are arranged on a single flat substrate 203, while the distance B between the power receiving resonance coil 208 and the power receiving coil 207 is fixed. This way, it is possible to integrally form the power supplying coil 204 and the power supplying resonance coil 205 instead of forming them separately, and integrally form the power receiving resonance coil 208 and the power receiving coil 207 instead of forming them separately. Thus, the number of parts involved at the stage of manufacturing the wireless power supply system 201 is reduced.

Although the above descriptions have been provided with regard to the characteristic parts so as to understand the invention more easily, the invention is not limited to the embodiment as described above and can be applied to the other embodiments. Furthermore, the terms and phraseology used in the specification have been used to correctly illustrate the invention, not to limit it. In addition, it will be understood by those skilled in the art that the other structures, systems, methods and the like included in the spirit of the invention can be easily derived from the spirit of the invention described in the specification. Accordingly, it should be considered that the invention covers equivalent structures thereof. In addition, it is required to sufficiently refer to the documents that have been already disclosed, so as to fully understand the objects and effects of the invention.

Reference Signs List

101     Wireless power supply system

| 104 | Power supplying coil |
| 105 | Power supplying resonance coil |
| 106 | AC power source |
| 107 | Power receiving coil |
| 108 | Power receiving resonance coil |
| 109 | Power supplying/receiving unit |
| D | Coil diameter of power supplying resonance coil |
| E | Coil diameter of power receiving resonance coil |

**Claims**

1. A wireless power supply system (101) configured to transmit power as magnetic field energy from a power supplying resonance coil (105) to a power receiving resonance coil (108) by resonating the power supplying resonance coil (105) with the power receiving resonance coil (108), wherein
a coil diameter of the power receiving resonance coil (108) is made smaller than a coil diameter of the power supplying resonance coil (105),
a ratio of the coil diameter of the power supplying resonance coil (105) and the coil diameter of the power receiving resonance coil (108) falls within a range of 100:7 to 100:15,
the wireless power supply system (101) comprises:

a power supply unit (106) configured to supply power which is an alternating current;
a power supplying coil (104) connected to the power supply unit (106) and is configured to supply the power to the power supplying resonance coil (105) by means of electromagnetic induction;
a power receiving coil (107) to which the power is supplied from the power receiving resonance coil (108) by means of the electromagnetic induction; and
a power supplying/receiving unit (109) connected to the power receiving coil (107),

the distance between the power supplying coil (104) and the power supplying resonance coil (105) is fixed, and
the distance between the power receiving coil (107) and the power receiving resonance coil (108) is fixed.

2. A wireless power-supply method which transmits power as magnetic field energy from a power supplying resonance coil to a power receiving resonance coil (108) by resonating the power supplying resonance coil (105) with the power receiving resonance coil (108), wherein
a coil diameter of the power receiving resonance coil (108) is made smaller than a coil diameter of the power supplying resonance coil (105),
a ratio of the coil diameter of the power supplying resonance coil (105) and the coil diameter of the power receiving resonance coil (108) falls within a range of 100:7 to 100:15,
the wireless power-supply method comprises:

supplying, by a power supply unit (106), power which is an alternating current;
supplying, by a power supplying coil (104) connected to the power supply unit (106), the power to the power supplying resonance coil (105) by means of electromagnetic induction; and
supplying the power to a power receiving coil (107), to which a power supplying/receiving unit (109) is connected, from the power receiving resonance coil (108) by means of the electromagnetic induction,
wherein
the distance between the power supplying coil (104) and the power supplying resonance coil (105) is fixed, and
the distance between the power receiving coil (107) and the power receiving resonance coil (108) is fixed.

**Patentansprüche**

1. Drahtloses Stromversorgungssystem (101), konfiguriert, um Strom als Magnetfeldenergie aus einer stromversorgenden Resonanzspule (105) zu einer stromempfangenden Resonanzspule (108) zu übertragen durch Resonanz einer stromversorgenden Resonanzspule (105) mit der stromempfangenden Resonanzspule (108), wobei
ein Spulendurchmesser der stromempfangenden Resonanzspule (108) kleiner ausgestaltet ist als ein Spulendurchmesser der stromversorgenden Resonanzspule (105),
ein Verhältnis des Spulendurchmessers der stromversorgenden Resonanzspule (105) und des Spulendurchmessers der stromempfangenden Resonanzspule (108) in einen Bereich von 100:7 bis 100:15 fällt,
wobei das drahtlose Stromversorgungssystem (101) umfasst:

eine Stromversorgungseinheit (106), konfiguriert, um mit Strom zu versorgen, der ein Wechselstrom ist;
eine Stromversorgungsspule (104), verbunden mit der Stromversorgungseinheit (106) und konfiguriert, um die stromversorgende Resonanzspule (105) durch elektromagnetische Induktion mit Strom zu versorgen;
eine Stromempfangsspule (107), die von der stromempfangenden Resonanzspule (108) durch elektromagnetische Induktion mit Strom versorgt wird; und
eine Stromversorgungs-/empfangseinheit (109), verbunden mit der Stromempfangsspule (107),
der Abstand zwischen der Stromversorgungsspule (104) und der stromversorgenden Resonanzspule (105) festgelegt ist, und
der Abstand zwischen der Stromempfangsspule (107) und der stromempfangenden Resonanzspule (108) festgelegt ist.

2. Drahtloses Stromversorgungsverfahren, das Strom als Magnetfeldenergie aus einer stromversorgenden Resonanzspule zu einer stromempfangenden Resonanzspule (108) überträgt durch Resonanz einer stromversorgenden Resonanzspule (105) mit einer stromempfangenden Resonanzspule (108), wobei ein Spulendurchmesser der stromempfangenden Resonanzspule (108) kleiner ausgestaltet ist als ein Spulendurchmesser der stromversorgenden Resonanzspule (105),
ein Verhältnis des Spulendurchmessers der stromversorgenden Resonanzspule (105) und des Spulendurchmessers der stromempfangenden Resonanzspule (108) in einen Bereich von 100:7 bis 100:15 fällt,
wobei das drahtlose Stromversorgungsverfahren umfasst:

Versorgen, durch eine Stromversorgungseinheit (106), mit Strom, der ein Wechselstrom ist;
Versorgen, durch eine Stromversorgungsspule (104), verbunden mit der Stromversorgungseinheit (106), der stromversorgenden Resonanzspule (105) durch elektromagnetische Induktion mit Strom;
Versorgen einer Stromempfangsspule (107) mit Strom, mit der eine Stromversorgungs-/empfangseinheit (109) verbunden ist, von der stromempfangenden Resonanzspule (108) durch elektromagnetische Induktion,
wobei
der Abstand zwischen der Stromversorgungsspule (104) und der stromversorgenden Resonanzspule (105) festgelegt ist, und
der Abstand zwischen der Stromempfangsspule (107) und der stromempfangenden Resonanzspule (108) festgelegt ist.

## Revendications

1. Système de fourniture de puissance sans fil (101) configuré pour transmettre de la puissance comme énergie de champ magnétique d'une bobine de résonance de fourniture de puissance (105) à une bobine de résonance de réception de puissance (108) en faisant résonner la bobine de résonance de fourniture de puissance (105) avec la bobine de résonance de réception de puissance (108), dans lequel
un diamètre de bobine de la bobine de résonance de réception de puissance (108) est rendu inférieur à un diamètre de bobine de la bobine de résonance de fourniture de puissance (105),
un rapport du diamètre de bobine de la bobine de résonance de fourniture de puissance (105) et du diamètre de bobine de la bobine de résonance de réception de puissance (108) tombe au sein d'une plage de 100/7 à 100/15,
le système de fourniture de puissance sans fil (101) comprend :

un module de fourniture de puissance (106) configuré pour fournir de la puissance qui est un courant alternatif ;
une bobine de fourniture de puissance (104) connectée au module de fourniture de puissance (106) et est configurée pour fournir la puissance à la bobine de résonance de fourniture de puissance (105) au moyen d'une induction électromagnétique ;
une bobine de réception de puissance (107) à laquelle la puissance est fournie depuis la bobine de résonance de réception de puissance (108) au moyen de l'induction électromagnétique ; et
un module de fourniture/réception de puissance (109) connecté à la bobine de réception de puissance (107),
la distance entre la bobine de fourniture de puissance (104) et la bobine de résonance de fourniture de puissance (105) est fixe, et
la distance entre la bobine de réception de puissance (107) et la bobine de résonance de réception de puissance (108) est fixe.

**2.** Procédé de fourniture de puissance sans fil qui transmet de la puissance comme énergie de champ magnétique d'une bobine de résonance de fourniture de puissance à une bobine de résonance de réception de puissance (108) en faisant résonner la bobine de résonance de fourniture de puissance (105) avec la bobine de résonance de réception de puissance (108), dans lequel un diamètre de bobine de la bobine de résonance de réception de puissance (108) est rendu inférieur à un diamètre de bobine de la bobine de résonance de fourniture de puissance (105),

un rapport du diamètre de bobine de la bobine de résonance de fourniture de puissance (105) et du diamètre de bobine de la bobine de résonance de réception de puissance (108) tombe au sein d'une plage de 100/7 à 100/15, le procédé de fourniture de puissance sans fil comprend :

fournir, par un module de fourniture de puissance (106), de la puissance qui est un courant alternatif ;

fournir, par une bobine de fourniture de puissance (104) connectée au module de fourniture de puissance (106), la puissance à la bobine de résonance de fourniture de puissance (105) au moyen d'une induction électromagnétique ; et

fournir la puissance à une bobine de réception de puissance (107) à laquelle un module de fourniture/réception de puissance (109) est connecté, depuis la bobine de résonance de réception de puissance (108) au moyen de l'induction électromagnétique,

dans lequel

la distance entre la bobine de fourniture de puissance (104) et la bobine de résonance de fourniture de puissance (105) est fixe, et

la distance entre la bobine de réception de puissance (107) et la bobine de résonance de réception de puissance (108) est fixe.

FIG.1

FIG.2

## FIG.3

## FIG.4

# FIG.5

COMPARATIVE EXAMPLE 1
DIAMETER OF POWER SUPPLYING RESONANCE COIL 100mm $\phi$
DIAMETER OF POWER RECEIVING RESONANCE COIL 100mm $\phi$
(100:100)

POWER TRANSMISSION EFFICIENCY (%)

DISTANCE C [mm]

FIG.6

EXAMPLE 1
DIAMETER OF POWER SUPPLYING RESONANCE COIL 100mm $\phi$
DIAMETER OF POWER RECEIVING RESONANCE COIL 13mm $\phi$
(100: 13)

POWER
TRANSMISSION
EFFICIENCY
(%)

DISTANCE C [mm]

## FIG.7

EXAMPLE 2
DIAMETER OF POWER SUPPLYING RESONANCE COIL 320mm $\phi$
DIAMETER OF POWER RECEIVING RESONANCE COIL 25mm $\phi$
(100: 7.8)

POWER TRANSMISSION EFFICIENCY (%)

DISTANCE C [mm]

# FIG.8

OFFICE

EFFECTIVE POWER
OR HIGHER

LESS THAN
EFFECTIVE POWER

POWER TRANSMISSION EFFICIENCY

100
90
80
70
60
50
40
30
20
10
0

DISTANCE C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010239769 A
- JP TOKUKAI2010239769 B
- JP 2010239777 A
- JP TOKUKAI2010239777 B
- JP 2010124522 A
- JP TOKUKAI2010124522 B
- US 2010213770 A1
- JP 2010103200 A
- US 2010123452 A1